# EUROPEAN PATENT APPLICATION

(11) **EP 2 416 317 A1**
(43) Date of publication of application: **08.02.2012**
(21) Application number: 10171771.8
(22) Date of filing: 03.08.2010
(51) Int. Cl.: G11B 20/00, H04N 5/913, H04L 29/06

(54) **Detection of watermarks in signals**

(71) Applicant: IRDETO B.V., 2132 LS Hoofddorp (NL)
(72) Inventor: Westerveld, Egbert, 2132 LS Hoofddorp (NL)
(74) Representative: Tucker, Nigel P.

(57) **Abstract**

The invention provides for a method and a device for the detection of a watermark in a signal. A first signal is compared with two or more second signals. The second signal with the closest match contains the same watermark as in the first signal. Data indicative for the second signal with the closest match is output as an indication of the watermark in the first signal. The invention further provides for a head-end system that provides watermarked content from which the watermarks are detectable by the watermark detection device.

## Description

### FIELD OF THE INVENTION

The present invention relates to watermark detection devices and to head-end systems for generating detectable watermarked content.

### BACKGROUND

Watermarking belongs to the technology field of steganography that deals with hiding of an information signal in watermarked content, such that is substantially impossible to detect by human observers. The content is e.g. a data file or a data stream. The watermark information is substantially irremovable and is immune to manipulation of analog signals, such as audio and/or video signals, that are decoded from the content. Typically, watermarking is used to trace files or streams that are distributed via unauthorized distribution networks.

A data stream typically comprises one or more content streams, such as e.g. an audio and/or video stream or digital TV stream. Typically, the watermark is inserted into the content stream at a sender such that it can be detected in the analogue domain after decoding in a receiver. Alternatively the watermark may be inserted at the source of the content or by equipment at the end-user.

The information contained in the watermark generally serves to record the path from a studio to a broadcaster. Typically, no further downstream information can be included as the watermark is applied at the broadcast head-end or in the analogue copy obtained from the video content rights holder at the studio.

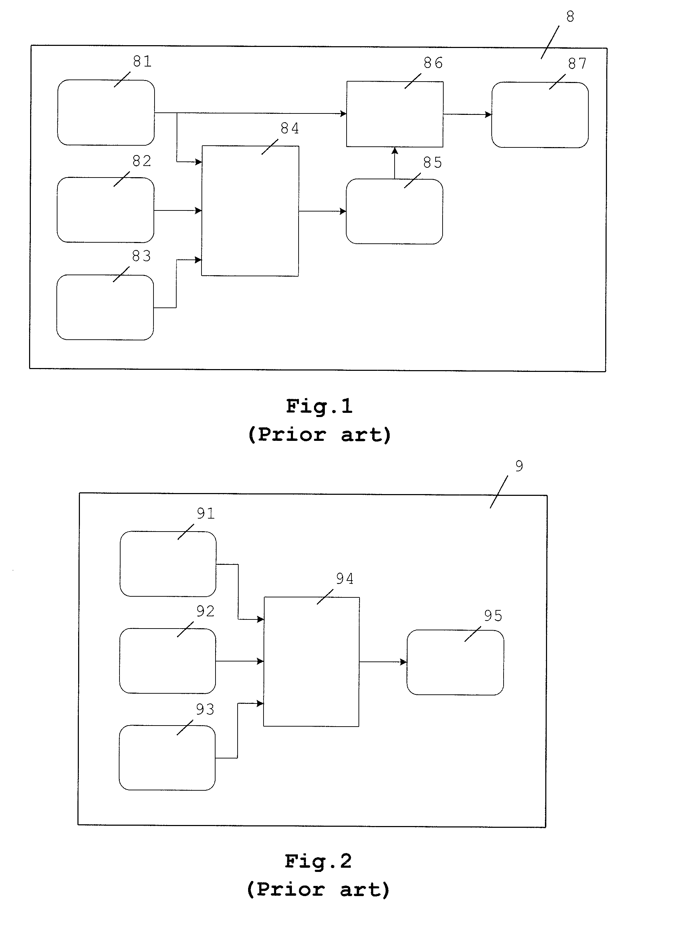

In a distributive environment the watermark is typically inserted in a data stream by a secure head-end system. Fig.1 shows an example of a watermark insertion process in a head-end system 8, wherein a message 82 is to be inserted into a content stream 81. Typically the message 82 will be inserted into only a part of the content stream 81. A watermark function 84 uses the content stream 81, the message 82 and predefined watermark parameters 83 to generate a watermark signal 85 that is added to the content stream 81 by an insertion function 86 to obtain watermarked content 87.

A fingerprint is a specific type of watermark that is inserted further down the broadcast chain. A fingerprint typically contains information that identifies a receiver of the data stream. Fingerprint information is used in a wide range of forensic applications.

Watermark detection operates on an individual file or content stream. It is known that illegal distributors of watermarked content try to manipulate the watermarked content such that a watermark detection device fails to detect the presence of the watermark signal. A more robust watermark makes it more difficult to manipulate the watermarked content, but there is a trade-off between the robustness of the watermark and the human perception threshold.

Detection of the presence of a watermark generally is the first step in an attack against the watermarking scheme. Knowing the watermarking algorithm makes it easier to manipulate the watermarked content. A sophisticated watermarking algorithm may be used to make it difficult to detect the particular algorithm, but this does not necessarily produce a robust watermark. Even sophisticated algorithms for inserting watermark signals into content can be defeated by content modifications if the watermark signals are highly imperceptible.

The detection of a watermark usually requires a detection device that detects the presence of the watermark and decodes the message conveyed in the watermark. Fig.2 shows an example of a watermark detection process in a watermark detection device 9. The watermark detection processes uses watermarking parameters 93 that match the watermarking parameters 83 used during the watermark insertion process. The detection device 9 may use the original unmarked version (or a copy thereof) of the content 92 to aid in the detection process. The original content 92 is typically identical to the original content 82 shown in Fig.1. An inverse watermark function 94 uses the watermarked content 91, the watermark parameters 93 and optionally the original content 92 to generate a message 95. The watermarked content 91 is typically identical to the watermarked content 87 as generated in the head-end system 8, but may be a modified version thereof still containing the watermark. Message 95, if correctly obtained, corresponds to the message 82 as inserted in the head-end system 8.

The watermark detection is typically performed in a dedicated detection device. Alternatively the watermark detection may be embedded in a consumer device, e.g. when the information in the message is used to control the operation of the consumer device for the watermarked content. Watermark detection functionality in a consumer device is typically implemented in a secure environment to minimize reverse engineering and manipulation possibilities.

As illustrated by Fig.1 and Fig.2, known watermark detection devices are closely linked to watermark insertion devices by the common (set of) watermarking algorithm(s) as defined by the watermark functions and watermark parameters. Such close link between the watermark insertion device and the watermark detection device is problematic for applications that require flexible switching of watermarking algorithms in order to adapt to attacks that aim to destroy the watermark in the watermarked content, as a change of watermarking algorithm requires an update of both the watermark insertion devices and the watermark detection devices. Flexible switching of watermarking algorithms is typically desirable, because existing watermarking algorithms can be common to a group of receivers or possibly, e.g. in a conditional access system, to all receivers. Consequently, a single output modification tool created by an attacker may be easily reused to destroy the watermark in the output of many receivers.

There is a need for a watermark detection device that operates independent of the watermark algorithm used.

### SUMMARY OF THE INVENTION

The invention provides for a watermark detection device that operates independent of the watermarking algorithm used.

According to an aspect of the invention a method is proposed for detecting a watermark in a first signal. The method comprises receiving the first signal. The method further comprises comparing the first signal with each of two or more second signals to determine a closest second signal. Each second signal comprises a unique watermark. The closest second signal is one of the two or more second signals having a closest match with the first signal. The method further comprises outputting data indicative for the closest second signal as an indication of the watermark in the first signal.

According to an aspect of the invention a watermark detection device is provided for detecting a watermark in a first signal. The detection device comprises a comparator configured to compare the first signal with each of two or more second signals to determine a closest second signal. Each second signal comprises a unique watermark. The closest second signal is one of the two or more second signals having a closest match with the first signal. The detection device further comprises a memory configured to store data indicative for the closest second signal as an indication of the watermark in the first signal.

An example of data indicative for the closest second signal is a port number on which the closest second signal is received in the detection device. Another example is a meta data related to the closest second signal. Any other form of data may be used to indicate the closest second signal.

The indication of the watermark in the first signal may be used to derive the actual watermark in a separate process. Such derivation of the watermark may e.g. be implemented by having the sender of the closest second signal store a table for correlating the data indicative for the closest second signal to the watermark inserted in the closest second signal. As the watermark in the closest second signal equals the watermark in the first signal, the watermark in the first signal can thus be derived. Another example of how the watermark may be derived from the indication of the watermark, is having the port numbers on which the respective second signals are received have a one-to-one relation to a binary watermark value. With a binary watermark two second signals are e.g. received on two different ports, wherein the port number may be used to derive the watermark to be either "0" or "1". Any other form of watermark derivation may be used to obtain the actual watermark. Alternatively, the indication of the watermark provides enough information for tracking and/or tracing of the first signal and no further derivation of the actual watermark is needed.

Because the watermark detection device operates independently of the used watermarking algorithm and thus supports substantially any watermarking algorithm, the invention enables dynamic changes to the watermarking algorithm or to a watermarking insertion device while still achieve reliable watermark detection and without any modifications or loss of detection sensitivity.

The embodiments of claims 2 and 9 advantageously enable the data indicative for the closes second signal to be related to the decryption key of the closest second signal. Thus, the key used to encrypt the second signal is indicative for the watermark in the second signal.

The embodiments of claims 3 and 11 advantageously enable a sender of the signals to be in control of the watermark inserted in the signals. The sender is e.g. a head-end system.

The embodiments of claims 4 and 12 advantageously enable transmission of a single signal, i.e. the third signal, to the watermark detection device, from which the two or more second signals are obtained. Thus, transmission bandwidth may be saved.

The embodiments of claims 5 and 6 and claims 13 and 14 advantageously enable data indicative for the closes second signal, which second signal is obtained from the third signal, to be related to the decryption key of the closest second signal. Thus, the key used to encrypt the second signal is indicative for the watermark in the second signal.

The embodiments of claims 5 and 13 enable a sender of the signals to be in control of the watermark inserted in the signals. The sender is e.g. a head-end system.

The embodiments of claims 6 and 14 enable the error handler, which is typically specific to the original receiver of the first signal from where the first signal is redistributed, to be decisive for the watermark inserted in the first signal. Thus tracking the first signal to the original receiver becomes possible.

The embodiments of claims 7 and 15 advantageously enable watermarks to be formed and detected that are difficult to find by an attacker. Although the bit errors are deliberately introduced, they could just as well have been caused by e.g. transmission errors.

The embodiment of claim 8 advantageously enables detection of a fingerprint formed by a sequence of watermarks.

According to an aspect of the invention a head-end system is proposed for generating a signal. From the signal a watermark is detectable when processed by a detection device having one or more of the above mentioned features. The head-end system comprises a duplicator configured to create two or more copies of at least a part of a source signal. The head-end system further comprises a bit error generator configured to introduce one or more bit errors in at least one of the two or more copies. The bit errors are different for each copy. The head-end system further comprises an encryptor configured to encrypt each copy with a unique encryption key. The signal comprises at least one of the encrypted copies with bit errors.

Thus, signals are generated from which watermarks can be formed and detected that are difficult to find by an attacker. Although the bit errors are deliberately introduced, they could just as well have been caused by e.g. transmission errors.

According to an aspect of the invention a computer program element is provided, which, when being executed by a processor, is adapted to carry out a method having one or more of the above mentioned features.

Hereinafter, embodiments of the invention will be described in further detail. It should be appreciated, however, that these embodiments may not be construed as limiting the scope of protection for the present invention.

### BRIEF DESCRIPTION OF THE DRAWINGS

Aspects of the invention will be explained in greater detail by reference to exemplary embodiments shown in the drawings, in which:
Fig.1 shows a prior art example of a watermark insertion process in a head-end system;
Fig.2 shows a prior art example of a watermark detection process in a watermark detection device;
Fig.3 shows a watermark detection device of an exemplary embodiment of the invention;
Fig.4 shows a watermark detection device of an exemplary embodiment of the invention;
Fig.5 shows a watermark detection device of an exemplary embodiment of the invention;
Fig.6 shows a flow chart of steps of a method performed by a watermark detection device of an exemplary embodiment of the invention;
Fig.7 shows a flow chart of steps of a method performed by a watermark detection device of an exemplary embodiment of the invention;
Fig.8 shows a flow chart of steps of a method performed by a watermark detection device of an exemplary embodiment of the invention; and
Fig.9 shows a head-end system of an exemplary embodiment of the invention.

### DETAILED DESCRIPTION OF THE DRAWINGS

The invention provides for a watermark detection device that operates independently of substantially any watermarking algorithms used in a watermark insertion device. Because the generic watermark detection device supports substantially any watermarking algorithm, it can deal with dynamic changes to the watermarking algorithm used and/or watermarking insertion device while still achieve reliable watermark detection without any modifications or loss of detection sensitivity.

The watermark detection device supports watermarking algorithms wherein a receiver input produces an implementation specific watermarked content output, e.g. when based on error concealment algorithms in a decoder or an error handler of a receiver.

The watermark detection device identifies a watermarked message in the watermarked content output of a receiver, which is input to the detection device. The input to the detection device is e.g. an analogue TV output of the receiver wherein the watermark is present. In contrast to known watermark detection methods the invention provides for a watermark detection device that operates without knowledge of the watermark algorithm that was used to generate the watermarked content.

In the figures and the following description thereof rounded boxes with reference numbers in thousands indicate signals. Rectangles with single or double digit reference numbers indicate devices, modules or parts. Boxes with reference numbers in hundreds indicate steps of a method. Alphabetical suffices are used to indicate alternatives. Dashed elements are optional.

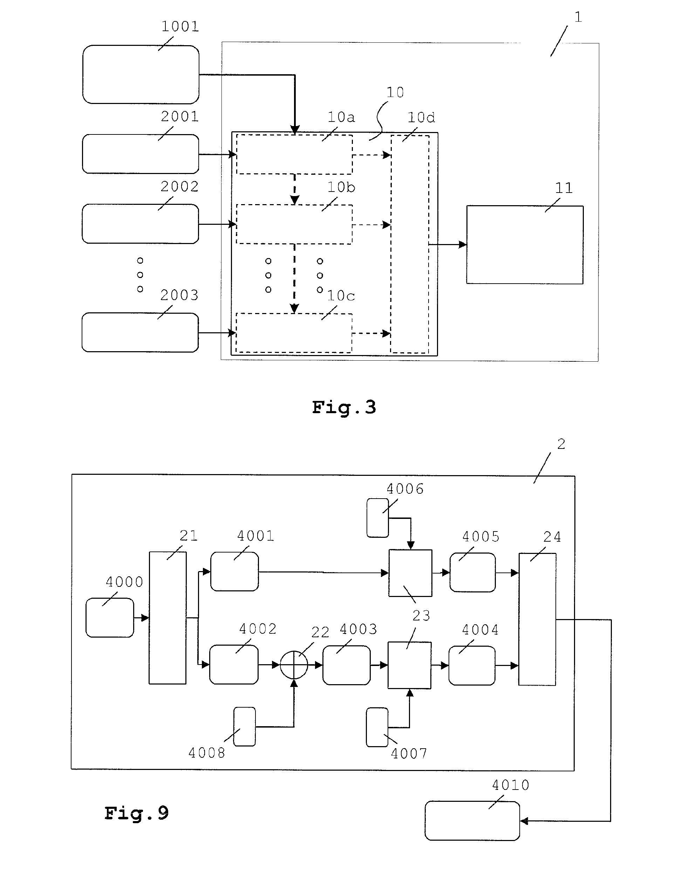

Fig.3 shows a watermark detection device 1 of an exemplary embodiment of the invention. A first signal 1001 is the input signal from which the watermark is to be detected. The first signal 1001 is typically a segment of a file or a content stream wherein a watermark could be present and originates from a device under test, which could be a pirated device or any other device which identity is to be resolved. Second signals 2001, 2002 and 2003 are reference signals that will be compared with the first signal 1001. The number of reference signals 2001-2003 depends on the number of unique watermarks and may be more than three. The bubbles between reference signal 2002 and reference signal 2003 indicate that there may be more reference signals. In case of a binary watermarking system, wherein the first signal has either a binary "0" or a binary "1" as a watermark, only two second signals 2001 and 2002 suffice. It will be understood that with a binary watermarking system, subsequent input signals 1001 may form a bit pattern of multiple bits as watermark.

In Fig.3 the input segment 1001 of a particular content has three possible watermarked content variants. Each reference signal 2001, 2002 and 2003 are watermarked with a different and unique variant of the watermark. The detection device 1 compares all possible watermarked segments 2001, 2002 and 2003 in a comparator 10 with the segment 1001 received from the device under test and determines a closest match for it. The result can be linked to a part of the watermark message. A sequence of such comparison for subsequent input signals 1001 produces the entire message or fingerprint.

The comparator 10 may have a comparator 10a, 10b and 10c for each of the reference signals 2001, 2002 and 2003, respectively. Each comparator 10a, 10b, 10c compares the reference signal with the input signal 1001. An optimizer 10d combines the results of comparators 10a, 10b and 10c to output the matching result.

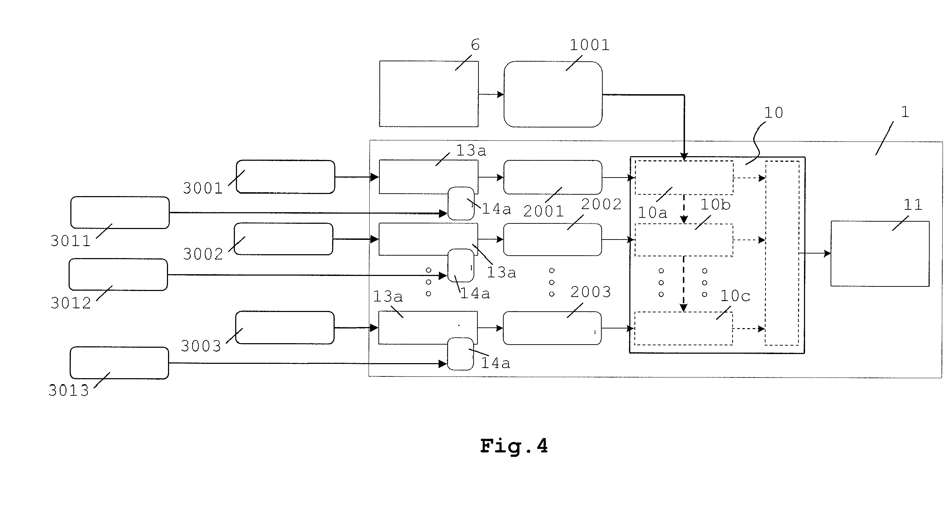

The result of the comparison is typically in the form of data indicative for the closest match and is stored in a memory 11. If e.g. reference signal 2002 has the closest match with input signal 1001 then the comparison result contains an indication that input signal 2002 was the closes match. The data indicative for this closest match can be in any form. Non limiting examples are a port number whereon reference signal 2002 was input to the detection device 1, an identifier present in the reference signal 2002 and an identifier for a specific control word that is used to decrypt reference signal 2002 prior to the comparison (see Fig.4 for an example hereof).

The indication of the watermark in the first signal may be used to derive the actual watermark in a separate process, which is out of the scope of the present invention. Such derivation of the watermark may e.g. be implemented by having the sender of the closest second signal store a table for correlating the data indicative for the closest second signal to the watermark inserted in the closest second signal. As the watermark in the closest second signal equals the watermark in the first signal, the watermark in the first signal can thus be derived. Another example of how the watermark may be derived from the indication of the watermark is having the port numbers on which the respective second signals are received have a one-to-one relation to a binary watermark value. With a binary watermark two second signals are e.g. received on two different ports, wherein the port number may be used to derive the watermark to be either "0" or "1". Any other form of watermark derivation may be used to obtain the actual watermark. Alternatively, the indication of the watermark provides enough information for tracking and/or tracing of the first signal and no further derivation of the actual watermark is needed.

The watermark detection relies on the input of reference signals of all possible watermarked content variants that receivers can generate for a given content stream. In Fig.4 a watermark detection device of an exemplary embodiment of the invention is shown, wherein each reference signal 2001, 2002, 2003 is obtained through a receiver 13a. The three receivers 13a are configured to produce all of the three different watermarked content segments 2001, 2002 and 2003 against which the input 1001 from the device under test is compared.

In the example of Fig.4 a set of control words (CWs) or decryption keys 3011, 3012, 3013 are transmitted to smartcards 14a. Each smartcard sends a unique control word to the receiver 13a to which the smartcard 14a is attached to allow decryption of encrypted reference signal 3001, 3002 and 3003 (i.e. third signals) into reference signal 2001, 2002 and 2003, respectively.

The specific CW 3011, 3012, 3013 used for decrypting an encrypted reference signal 3001, 3002, 3003 may be determining for the specific watermark in the reference signal 2001, 2002, 2003. Each CW 3011, 3012, 3013 is linked to a specific receiver 13a to generate a watermarked content segment 2001, 2002, 2003 for the comparator 10. Smartcards 14a with suitably modified firmware can be used to establish this type of configuration. After finding the closest match for the content segment, an identifier of the specific CW 3011, 3012 or 3013 may be used to construct the watermarking message (i.e. a sequence of watermarks) from a sequence of successive content segments 1001.

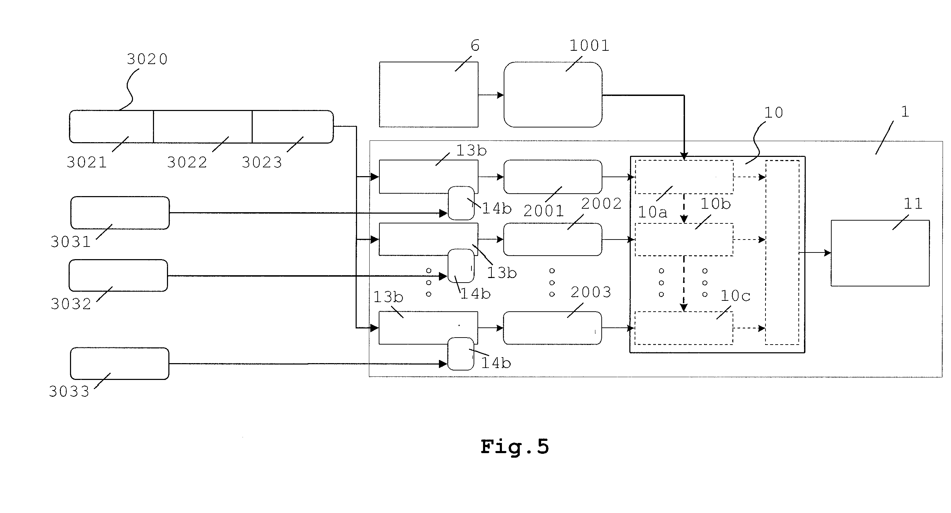

In Fig.4 the encrypted reference signals 3001, 3002 and 3003 are received as separate inputs. Fig.5 shows an alternative to the example of Fig.4, wherein encrypted reference signals 3021, 3022 and 3023 are parts of a single encrypted reference signal 3020 (i.e. a single third signal). With binary watermarking two receivers 13b may be used as the fingerprinting system uses two CWs to insert either a "0" or a "1" depending on a specific selection function in the smartcard.

The exemplary embodiment of Fig.5 makes use of error handling capabilities of receivers 13b. The error handling capabilities are typically implemented in a software implemented or a hardware implemented error handling module of the receiver 13b. Error handling capabilities are typically used to overcome transmission errors between a headend system and the receiver that can result in missing data elements or damaged data structures in the data stream, making it impossible to further process the data stream in the receiver.

When there are short sequences of errors, the error handling will attempt to resume decoding as quickly as possible to reduce any degradation in the analog output, which could be observed by the end-user. A loss of one or more data packets in the data stream results in a temporary interruption in the processing of the data stream and triggers the error handling module to apply an error handling technique that resumes processing of the data stream after the detection of a synchronization point in the content stream.

In case of encrypted reference signal 3020 being a MPEG-2 signal, the error handling module in MPEG-2 receiver 13b typically uses a Packet Elementary Stream (PES) header as synchronization point. The error handling module searches an audio PES and/or a video PES for a predefined 'packet_start_code_prefix' bit pattern that indicates the start of the PES header, as defined by international standard ISO/IEC 13818-1:2000. When the 'packet_start_code_prefix' bit pattern is detected, the PES will be processed from that point onwards.

Multiple variants 3021, 3022, 3022 of an original source signal are part of the encrypted reference stream 3020. The source signal is e.g. an audio PES or a video PES.

In a head-end system, such as shown in Fig.9, head-end system 2 received a digital source signal 4000 from an external source. The digital signal is e.g. a digital audio signal or a digital video signal. Alternatively the digital signal originates from within the headend system, e.g. from a storage (not shown) or from an encoder (not shown) that encodes an analog signal, such as an analog audio signal or analog video signal, into the digital signal. A duplicator 21 creates a number of copies 4001, 4002 of at least a part of the digital signal. Each copy will be processed into a variant of the part of the digital signal. In Fig.9 the head-end system 2 is arranged for the generation and processing of two copies 4001 and 4002. It is possible to arrange the headend system for the generation and processing of more than two copies.

Each copy of the digital signal is provided to an encryptor 23 for scrambling the digital signal 4001, 4002. Any known scrambling process can be used in the encryptor 23. The encryption is different for each copy of the digital signal. It is possible to configure the head-end system 2 to not scramble one or more digital signals.

To encrypt the copies 4001, 4002 differently, the copies are encrypted using different encryption schemes and/or using different encryption keys 4006, 4007. The CWs 4006 and 4007 used for scrambling the digital signals 4001 and 4002, respectively, are e.g. different for each copy of the digital signal.

A multiplexer 24 multiplexes the processed copies 4005, 4004 of the digital signal into a content stream 4010. Content stream 4010 corresponds to the encrypted reference stream 3020 of Fig.5 and the processed copies 4004,4005 correspond to variants within the encrypted reference stream, such as variants 3021-3023. In the content steam 4010 the processed copies 4004, 4005 are not identifiable as being related to a single one of the copies of the first digital signal 4000. Thus, in the content stream 4010 the processed copies 4004, 4005 cannot be identified as being copies and the content stream appears to be a conventional encrypted stream. The content stream is transmitted or broadcast to one or more receivers, including the receiver under test that generated the first signal 1001 and the receivers 13b.

The content stream 4010 generated by the head-end system 2 thus contains a first copy 4004 of a digital signal that is scrambled using a first encryption scheme and/or with a first encryption key 4007, and a second copy 4005 of the digital signal that is scrambled using a second encryption scheme different from the first encryption scheme and/or with a second encryption key 4006 different from the first encryption key.

For each copy of the digital signal 4001, 4002 a watermark insertion module (not shown) optionally processes the copy of the digital signal by changing the encoding of the packets into a form that will produce a hidden signal in the analogue output after decoding of the digital signal in a receiver of the digital signal. The thus inserted watermarking may form a part of a longer fingerprint sequence.

The head-end system 2 as shown in Fig.9 adds a bit error to the second copy 4002 to differentiate the first copy 4001 from the second copy 4002. Hereto a bit pattern 4008 is added to the second copy 4002 in bit error generator 22. Alternatively any other mechanism for introducing one or more bit errors may be used by bit error generator 22. The bit error(s) may be used as watermarking mechanism.

The content stream 4010 generated by the head-end system 2 thus includes a first copy 4005 of a digital signal that is scrambled using a first encryption scheme and/or with a first encryption key 4006, and a second copy 4004 of the digital signal that is watermarked with a bit error pattern 4008 and scrambled using a second encryption scheme different from the first encryption scheme and/or with a second encryption key 4007 different from the first encryption key 4006.

The CW to be used by a receiver 13b of the content stream 4010/3020 for descrambling only one copy 4004,4005 / 3021,2022,3023 of the digital signal is securely stored in an entitlement message, such as an ECM. The ECM is transmitted from the head-end system 2 to the receiver 13b. Typically the receiver 13b forwards the ECM to smartcard 14b for extraction of the CW 3021,3022,3023 from the ECM.

With reference to Fig.5, an error handling in the receiver 13b skips over longer error sequences caused by descrambling parts of the content stream with an unknown encryption scheme and/or incorrect CW and resumes the descrambling at a next valid synchronization point, e.g. at a next valid PES header. After decrypting the encrypted input signal 3020 with a particular CW 3031, 3032 or 3033, only one of the copies 3021,3022,3023 will be correctly decrypted. The error handler will skip over the incorrectly decrypted copies, thus effectively filtering out the incorrectly decrypted copies and leaving only one reference signal 2001, 2002 or 2003.

The reference signals 2001, 2002 and 2003 contain a watermark or one or more bit errors. The bit errors in reference signal 2001, 2002, 2003 are either processed by an error handler or by a decoder, depending on where in the reference signal 2001, 2002, 2003 the bit errors occur. The effect of the bit error on the error handler or decoder defines the watermark in the reference signal 2001, 2002, 2003, which is to be compared with the watermark in the first input signal 1001. The bit error may e.g. introduce unique glitches in the reference signal 2001, 2002, 2003.

For an attacker it is difficult to determine if a bit error distortion was caused by an accidental or an intentional error. Such simple watermarking schemes also complicate the deployment of an attack tool to remove or destroy the watermark in the output of a receiver. Since the resulting watermark depends on the error concealment implementation, either in a error handler or in a decoder, the attack tools would need to cover a wider range of distortions. In order to detect these distortions, the watermark detection device 1 needs to use the same receiver 13b for the reference signals as used in the CW sharing network (pirate receiver). As the pirate receiver is commonly available, this set-up can be realised by changing the set of receivers deployed in the detection device.

Error handling in a receiver 13b is typically implemented in a decompression module involved in the decoding of digital signals into analog signals. When the error handling module detects a longer sequence of bits that do not conform to a compression syntax, the error handler will skip data until it detects the next valid synchronization point. The error handler will then return control to the decompression module which resumes normal decoding.

As the error handling skips to the next synchronization point, it is beneficial if the fingerprinting scheme operates on packets that are aligned with a synchronization point. PES packets in MPEG-2 have such synchronization points. Similar packetization is possible with other compression formats, i.e. other than MPEG-2. Operating the watermarking scheme at the PES level enables the creation of two PES packets that are transmitted as separate packets and each copy is scrambled with a different CW. At the receiver only a single CW is used to descramble both packets resulting in one properly encoded PES packet and one PES packet consisting of random data. The error handling module will skip over the PES packet with random data, hence the decompression module only receives the properly descrambled PES packet. Effectively the error handling module has removed the PES packet encrypted with another CW from the stream.

The result of the error handler functionality in the receiver 13b is used to create two alternative encodings for the same PES packet, where each PES packet optionally contains a different watermarking pattern. Scrambling each of the PES packets with a different CW value enables the receiver to selectively delete all unwanted PES packets from the stream.

Instead of three dedicated receivers 13a for each of the reference signals 2001, 2002 and 2003 or three dedicated receivers 13b for processing each variant 3021, 3022 and 3023, a single receiver may be used that either processes the three input signals / variants in parallel or one after the other.

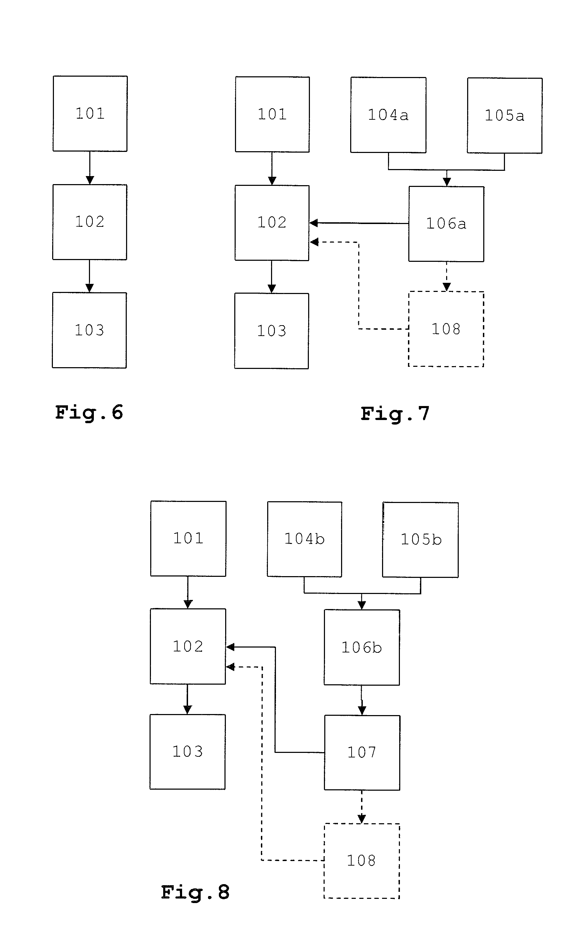

Fig.6 shows steps of a method of an exemplary embodiment of the invention, which may be used in the detection device as described in detail with Fig.3. In step 101 the first signal 1001 is received in the detection device 1. In step 102 the fist signal 1001 is compared with the reference signals 2001, 2002 and 2003, respectively. In step 1003 the data indicative for the closest match is output.

Fig.7 shows steps of a method of an exemplary embodiment of the invention, which may be used in the detection device as described in detail with Fig.4. In addition to the steps shown in Fig.6, two or third signals 3001, 3002, 3003 are received in step 104a. In step 105a the decryption keys 3011, 3012, 3013 for each of the respective third signals 3001, 3002 and 3003 are received. The encrypted reference signals 3001, 3002 and 3003 are decrypted in step 106a to obtain the reference signals 2001, 2002 and 2003. If the watermark is formed by a response to deliberately introduced bit errors, as described above, then in step 108 the bit errors are processed by either an error handler or a decoder by which the reference signals 2001, 2002 and 2003 are obtained.

Fig.8 shows steps of a method of an exemplary embodiment of the invention, which may be used in the detection device as described in detail with Fig.5. In addition to the steps shown in Fig.6, one third signal 3020 is received in step 104b. The third signal comprises encrypted copies 3021, 3022, 3023 of a source signal, each watermarked uniquely (possibly through the introduction of bit errors). In step 105b the decryption keys 3031, 3032, 3033 for each of the respective copies 3021, 3022 and 3023 are received. The encrypted reference signal 3020 is decrypted in step 106b to obtain decrypted reference signals. Each decrypted reference signal contains one decrypted copy that has been correctly decrypted while all other copies are incorrectly decrypted due to a non-matching CW. In step 107 each decrypted reference signal is input to an error handler to thereby filter out the incorrectly decrypted copies and thus obtain the reference signals 2001, 2002 and 2003. If the watermark is formed by a response to deliberately introduced bit errors, as described above, then in step 108 the bit errors in the reference signals 2001, 2002 and/or 2003 are processed by either a further error handler (which could be the same error handler as used to filter out the incorrectly decrypted copies) or a decoder by which the reference signals 2001, 2002 and 2003 are obtained.

It is to be understood that any feature described in relation to any one embodiment may be used alone, or in combination with other features described, and may also be used in combination with one or more features of any other of the embodiments, or any combination of any other of the embodiments. One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory or flash memory) on which alterable information is stored. Moreover, the invention is not limited to the embodiments described above, which may be varied within the scope of the accompanying claims.

## Claims

1. A method for detecting a watermark in a first signal, the method comprising:
receiving (101) the first signal (1001);
comparing (102) the first signal (1001) with each of two or more second signals (2001,2002,2003) to determine a closest second signal, wherein each second signal (2001,2002,2003) comprises a unique watermark, and wherein the closest second signal is one of the two or more second signals having a closest match with the first signal (1001); and
outputting (103) data indicative for the closest second signal as an indication of the watermark in the first signal.

2. The method according to claim 1, further comprising:
receiving (104a) two or more third signals (3001,3002,3003), wherein each third signal (3001,3002,3003) is encrypted with a unique key;
receiving (105a) decryption keys (3011,3012,3013) for each of the third signals (3001,3002,3003); and
decrypting (106a) each of the third signals (3001,3002,3003) with the corresponding decryption key (3011,3012,3013) to obtain the two or more second signals (2001,2002,2003).

3. The method according to claim 2, wherein each third signal (3001,3002,3003) comprises the unique watermark.

4. The method according to claim 1, further comprising:
receiving (104b) a third signal (3020) comprising two or more encrypted copies (3021,3022,3023) of a source signal, wherein each copy (3021,3022,3023) is encrypted with a unique key;
receiving (105b) decryption keys (3031,3032,3033) for each of the encrypted copies (3021,3022,3023);
decrypting (106b) the third signal (3020) with each of the decryption keys (3031,3032,3033), respectively, to obtain two or more decrypted third signals, wherein each decrypted third signal comprises decrypted copies of the source signal of which one decrypted copy is correctly decrypted and all other copies are incorrectly decrypted as a result of the decryption key used to decrypt the third signal corresponding to one of the encrypted copies only; and
inputting (107) each of the decrypted third signals to an error handler configured for discarding the incorrectly decrypted copies and to thereby obtain the two or more second signals (2001,2002,2003).

5. The method according to claim 4, wherein each encrypted copy (3021,3022,3023) of the source signal comprises the unique watermark.

6. The method according to claim 4, wherein a distortion in the second signal (2001,2002,2003) caused by the error handler defines the unique watermark.

7. The method according to claim 2 or claim 4, wherein at least one of the decrypted third signals comprises one or more bit errors deliberately introduced at a head-end system, the method further comprising processing (108) the bit errors in an error handler or in a decoder, and wherein the unique watermark is formed by the processing of the bit error.

8. The method according to any one of the claims 1-7, wherein the steps are repeated for successive first signals, and wherein successively detected watermarks form a fingerprint.

9. A watermark detection device (1) for detecting a watermark in a first signal (1001), the detection device (1) comprising:
a comparator (10) configured to compare the first signal (1001) with each of two or more second signals (2001,2002,2003) to determine a closest second signal, wherein each second signal (2001,2002,2003) comprises a unique watermark, and wherein the closest second signal is one of the two or more second signals having a closest match with the first signal (1001); and
a memory (11) configured to store data indicative for the closest second signal as an indication of the watermark in the first signal.

10. The detection device (1) according to claim 9, further comprising:
a receiver (13a) configured to receive two or more third signals (3001,3002,3003), wherein each third signal (3001,3002,3003) is encrypted with a unique key;
a secure device (14a) communicatively connected to the receiver (13a) and configured to receive decryption keys (3011,3012,3013) for each of the third signals (3001,3002,3003); and
a decryptor configured to decrypt each of the third signals (3001,3002,3003) with the corresponding decryption key (3011,3012,3013) to obtain the two or more second signals (2001,2002,2003).

11. The detection device (1) according to claim 10,
wherein each third signal (3001,3002,3003) comprises the unique watermark.

12. The detection device (1) according to claim 9, further comprising:
a receiver (13b) configured to receive a third signal (3020) comprising two or more encrypted copies (3021,3022,3023) of a source signal, wherein each copy (3021,3022,3023) is encrypted with a unique key;
a secure device (14b) communicatively connected to the receiver (13b) and configured to receive decryption keys (3031,3032,3033) for each of the encrypted copies (3021,3022,3023);
a decryptor configured to decrypt the third signal (3020) with each of the decryption keys (3031,3032,3033), respectively, to obtain two or more decrypted third signals, wherein each decrypted third signal comprises decrypted copies of the source signal of which one decrypted copy is correctly decrypted and all other copies are incorrectly decrypted as a result of the decryption key used to decrypt the third signal corresponding to one of the encrypted copies only; and
an error handler configured for discarding in each of the decrypted third signals the incorrectly decrypted copies and to thereby obtain the two or more second signals (2001,2002,2003).

13. The detection device (1) according to claim 12,
wherein each encrypted copy (3021,3022,3023) of the source signal comprises the unique watermark.

14. The detection device (1) according to claim 12,
wherein a distortion in the second signal (2001,2002,2003) caused by the error handler defines the unique watermark.

15. The detection device (1) according to claim 10 or claim 12, wherein at least one of the decrypted third signals comprises one or more bit errors deliberately introduced at a head-end system, the detection device (1) further comprising an error handler or a decoder configured to process the bit errors, and wherein the unique watermark is formed by the processing of the bit error.

16. A head-end system (2) for generating a signal (4010) from which a watermark is detectable when processed by the detection device (1) according to claim 15, the head-end system (2) comprising:
a duplicator (21) configured to create two or more copies (4001,4002) of at least a part of a source signal (4000);
a bit error generator (22) configured to introduce one or more bit errors in at least one of the two or more copies, wherein the bit errors are different for each copy; and
an encryptor (23) configured to encrypt each copy with a unique encryption key,
wherein the signal (4010) comprises at least one of the encrypted copies with bit errors.

17. A computer program element, which, when being executed by a processor, is adapted to carry out the method according to any one of the claims 1-8.
